# EUROPÄISCHE PATENTSCHRIFT

(11) **EP 2 547 540 B1**
(45) Veröffentlichungstag und Bekanntmachung des Hinweises auf die Patenterteilung: **23.04.2014**
(21) Anmeldenummer: 11708839.3
(22) Anmeldetag: 15.03.2011
(51) Int. Cl.: B60K 1/04, B60K 5/04

(54) **KRAFTFAHRZEUG**
MOTOR VEHICLE
VÉHICULE À MOTEUR

(30) Priorität: 16.03.2010 DE 102010011578
(43) Veröffentlichungstag der Anmeldung: 23.01.2013
(73) Patentinhaber: Bayerische Motoren Werke Aktiengesellschaft, 80809 München (DE)
(72) Erfinder: GLEYZES, Daniel, 597090 Singapore (SG); PERZL, Johann, 80992 Muenchen (DE); FICKEL, Hans, 85368 Moosburg (DE); HARRISON, Robert, 84427 Sankt Wolfgang (DE)
(86) Internationale Anmeldenummer: PCT/EP2011/053894
(87) Internationale Veröffentlichungsnummer: WO 2011/113830

(56) Entgegenhaltungen:
- EP-A2- 1 284 346
- WO-A1-2004/000597
- WO-A1-2007/135428

## Beschreibung

Die Erfindung betrifft ein Kraftfahrzeug mit wenigstens zwei Antriebsaggregaten in Form eines Verbrennungsmotors und eines Elektromotors sowie mit einer Brennstoffzelle zur Bereitstellung elektrischer Energie. Ein derartiges Kraftfahrzeug ist beispielsweise aus der DE 102 27 530 A1 bekannt.

Hiervon ausgehend ist es Aufgabe der Erfindung, ein Kraftfahrzeug bereit zu stellen, das bei hoher Praxistauglichkeit die Möglichkeit bietet, in begrenztem Umfang rein elektrisch betrieben zu werden, insbesondere ohne nennenswerte Einschränkung der Nutzungsmöglichkeiten des Innenraums und des Gepäckraums im Vergleich zu einem konventionellen Kraftfahrzeug.

Diese Aufgabe wird durch ein Kraftfahrzeug mit den Merkmalen des Anspruchs 1 gelöst.

Kerngedanke der Erfindung ist es hierbei, in einem am vorderen Endabschnitt des Kraftfahrzeugs vorhandenen Motorraum zusätzlich zu einem Verbrennungsmotor eine vergleichsweise klein dimensionierte Brennstoffzelle vorzusehen. Durch diese bewusste Dimensionierung der Brennstoffzelle in einer Größenordnung, die bevorzugt auf den Betrieb des Kraftfahrzeugs in innerstädtischen Bereichen ausgelegt ist, ergibt sich bei die Möglichkeit, sowohl den Verbrennungsmotor als auch die Brennstoffzelle in einem einzigen Abteil des Kraftfahrzeugs, nämlich dem Motorraum, anzuordnen.

Hierbei wird der von der Brennstoffzelle erzeugte Strom direkt oder über Zwischenspeicherung in einer Speichereinheit für elektrische Energie dem Elektromotor zugeführt. Wird die Brennstoffzelle mit Wasserstoff betrieben, der im Kraftfahrzeug mitgeführt wird, eröffnet sich die Möglichkeit, das Kraftfahrzeug im elektrischen Betrieb ohne Emission von Schadstoffen bewegen zu können. Hierzu ist die Brennstoffzelle als Niedertemperatur-Brennstoffzelle ausgelegt, die mit Wasserstoff aus einem eigens hierfür vorgesehenen Behälter gespeist wird.

Um die Brennstoffzelle im Motorraum des Kraftfahrzeugs neben dem Verbrennungsmotor unterbringen zu können, muss der Verbrennungsmotor entsprechend klein gebaut und/oder entsprechend platzsparend angeordnet sein. In bevorzugter Ausgestaltung der Erfindung wird ein Verbrennungsmotor quer zur Fahrtrichtung eingebaut und treibt über ein Getriebe und Antriebswellen die Räder der Vorderachse an.

In bevorzugter Ausgestaltung der Erfindung sind Verbrennungsmotor und Brennstoffzelle thermisch voneinander entkoppelt. Die Brennstoffzelle in der Ausführung als Niedertemperatur-Brennstoffzelle mit direkter Einspeisung von Wasserstoff kann so im optimalen Temperaturbereich bis etwa 60° C betrieben werden. Hierbei bietet sich in vorteilhafter Ausgestaltung der Erfindung eine Anordnung des Verbrennungsmotors in der Weise an, dass die Auslassseite des Verbrennungsmotors der Brennstoffzelle abgewandt ist. Bevorzugt ist der Verbrennungsmotor im vorderen Bereich des Motorraums angeordnet, mit einer fahrtrichtungszugewandten Positionierung des Abgaskrümmers, während sich die Brennstoffzelle im hinteren Abschnitt des Motorraums befindet, unmittelbar vor der so genannten Stirnwand, die den Motorraum von der Fahrgastzelle des Kraftfahrzeugs trennt. Durch diese Konfiguration wird die thermische Abschirmung der Brennstoffzelle gegenüber dem Verbrennungsmotor erleichtert.

Für die Geschwindigkeiten, mit denen Kraftfahrzeuge in innerstädtischen Bereichen bewegt werden, ist eine Leistung der Brennstoffzelle in der Größenordnung von etwa 5 kW ausreichend. Die Reichweite bei rein elektrischem Betrieb wird durch die Menge des mitgeführten Wasserstoffs bestimmt. Für höhere Geschwindigkeiten und Reichweiten im außerstädtischen Bereich ist der Verbrennungsmotor vorgesehen, der aus einem separaten Behälter für Kraftstoff (Benzin, Diesel, Erdgas) versorgt wird. Selbstverständlich kann der Verbrennungsmotor auch mit Wasserstoff (aus einem einzigen Behälter) betrieben werden.

Für Beschleunigungsvorgänge im innerstädtischen Bereich, die mit dem unmittelbar aus der bewusst klein dimensionierten Brennstoffzelle gelieferten Strom nicht mit ausreichender Dynamik bewältigt werden können, ist ein Speicher für elektrische Energie vorgesehen, so dass die Beschleunigungsvorgänge durch Entnahme zusätzlicher elektrischer Energie aus dem Speicher bewerkstelligt werden können. Während für die Konstantfahrt in einem innerstädtischen Bereich bereits eine recht kleine Antriebsleistung ausreichend ist, benötigt ein Kraftfahrzeug, das für den Transport von vier bis fünf Personen sowie Zuladung ausgelegt ist, eine deutlich höhere Antriebsleistung in den Beschleunigungsphasen, beispielsweise beim Anfahren an einer Ampel. Diese dynamischen Betriebsphasen des Kraftfahrzeugs im innerstädtischen Bereich können durch den als Zwischenspeicher ausgelegten elektrischen Speicher bewältigt werden. Der Zwischenspeicher wird zum einen von der Brennstoffzelle selbst durch Einspeisung überschüssiger elektrischer Energie während der Konstantfahrt geladen. Zusätzlich kann durch Rekuperation im Schubbetrieb und beim Abbremsen des Kraftfahrzeugs gewonnene elektrische Energie in den Zwischenspeicher eingespeist werden. Durch die Rekuperation ergibt sich eine deutliche Verbesserung der Energiebilanz für den Betrieb des Kraftfahrzeugs.

In besonders vorteilhafter Weise ist die Speichereinheit im Bereich des Mitteltunnels des Kraftfahrzeugs angeordnet, also im Bereich zwischen den beiden Vordersitzen. Bevorzugt geht der Mitteltunnel über dem Bereich der Vordersitze nach hinten hinaus und setzt sich im Bodenbereich vor den Fondsitzen und unterhalb der Fondsitze fort. Ein solcher Mitteltunnel ist beispielsweise bei Kraftfahrzeugen mit einem Frontmotor und Hinterachsantrieb allgemein bekannt und dient der Unterbringung einer Antriebswelle (Kardanwelle). Bei Kraftfahrzeugen mit einem Antriebskonzept ohne Kardanwelle steht der Bauraum im Bereich des Mitteltunnels für anderweitige Zwecke zur Verfügung, wie vorliegend für die Unterbringung der elektrischen Speichereinheit. Die elektrische Speichereinheit kann somit in einem besonders geschützten Bereich des Kraftfahrzeugs untergebracht werden, mit großer Sicherheit gegenüber Beschädigung im Fall eines Aufpralls des Kraftfahrzeugs, da die Speichereinheit bei einem Frontal-, Heck- und Seitenaufprall jeweils in großer Entfernung vom Aufprallort angeordnet ist.

Da die elektrische Speichereinheit für den Betrieb des Kraftfahrzeugs im innerstädtischen Bereich nur vergleichsweise geringe Energiemengen aufnehmen muss, weist in einer Ausgestaltung der Erfindung die Speichereinheit eine Mehrzahl von Doppelschicht-Kondensatoren auf. Diese auch als "Supercaps" oder "Ultracaps" bezeichneten Kondensatoren zeichnen sich durch große Robustheit gegenüber mechanischen Beanspruchungen aus. Sie haben eine lange Lebensdauer und müssen nicht gekühlt werden. Damit ergeben sich Vorteile beispielsweise gegenüber Lithium-Ionen-Batterien, die zwar eine höhere Kapazität haben, jedoch deutlich empfindlicher sind und in der Regel an einen Kühlkreislauf angeschlossen werden müssen. Selbstverständlich können jedoch auch Lithium-Ionen-Batterien eingesetzt werden, ebenso wie alle anderen bekannten Arten von Speichern für elektrische Energie.

In weiterer Ausgestaltung der Erfindung ist im Bereich vor der Hinterachse wenigstens ein Behälter für einen Betriebsstoff für die Brennstoffzelle und/oder für den Verbrennungsmotor vorgesehen. Dieser Bereich zeichnet sich ebenso wie der Bereich des Mitteltunnels durch eine große Sicherheit gegenüber Beschädigungen aus, da sich in diesem Bereich selbst bei höheren Kollisionsgeschwindigkeiten nur vergleichsweise geringe Verformungen der Fahrzeugstruktur ergeben. Insbesondere kann ein Behälter für Wasserstoff in diesem Bereich in besonders sicherer Weise untergebracht werden.

In weiterer Ausgestaltung der Erfindung treibt der Elektromotor bevorzugt über ein Getriebe die Räder der Hinterachse direkt an. Hierzu ist der Elektromotor in Platz sparender Bauweise unmittelbar benachbart zur Hinterachse angeordnet.

Weitere Komponenten zum Betrieb des Elektromotors, wie beispielsweise eine Leistungselektronik, ein DC/DC-Wandler, ein Wechselrichter oder sonstige Steuerungs- und Regelungseinrichtungen können in besonders vorteilhafter Weise benachbart zum Elektromotor angeordnet werden, indem der Bauraum im unteren Bereich eines hinteres Gepäckraumes des Kraftfahrzeugs genutzt wird. Hierdurch wird zwar das nutzbare Gepäckraumvolumen des Kraftfahrzeugs etwas reduziert, es verbleibt jedoch noch ein relativ großes Volumen zur Unterbringung von Gepäck, so dass der Gebrauchsnutzen des Kraftfahrzeugs im Vergleich zu einem konventionellen Kraftfahrzeug nur in geringem Maß eingeschränkt wird.

Soweit die genannten Komponenten gekühlt werden müssen, sind sie über wenigstens einen Kühlkreislauf an wenigstens einen Wärmetauscher, der sich im Frontbereich des Kraftfahrzeugs befindet, angeschlossen. Neben dem Verbrennungsmotor müssen vor allem der Elektromotor sowie die Brennstoffzelle gekühlt werden. Auch die Leistungselektronik braucht üblicherweise eine gesonderte Wärmeabfuhr, ebenso wie der DC/DC-Wandler und der Wechselrichter.

Ein mögliches Ausführungsbeispiel der Erfindung ist in der Zeichnung dargestellt und wird nachfolgend näher erläutert. Es zeigt:
- Fig. 1: eine schematische Darstellung eines erfindungsgemäßen Kraftfahrzeugs in der Draufsicht,
- Fig. 2: eine der Fig. 1 entsprechende Darstellung des Kraftfahrzeugs, in der Seitenansicht,
- Fig. 3: eine perspektivische Darstellung des erfindungsgemäßen Kraftfahrzeugs; mit Hervorhebung der erfindungsrelevanten Komponenten,
- Fig. 4: eine perspektivische Darstellung einer Brennstoffzelle des erfindungsgemäßen Kraftfahrzeug,
- Fig. 5: eine Unteransicht des erfindungsgemäßen Kraftfahrzeugs,
- Fig. 6: Darstellungen einer elektrischen Speichereinheit und
- Fig. 7: eine perspektivische Darstellung eines Behälters für einen Betriebsstoff des erfindungsgemäßen Kraftfahrzeugs.

Ein in seiner Gesamtheit mit 2 bezeichnetes Kraftfahrzeug ist als sogenanntes Fließheck-Fahrzeug ausgebildet, mit einem Motorraum 6 im Vorderwagen 4, einer Fahrgastzelle 8, deren beide Türen 10 Zugang zu einem Fahrersitz 11, einem Beifahrersitz 13 und einer Fondsitzbank 15 ermöglichen sowie mit einem Gepäckraum 12, der über eine Heckklappe 14 zugänglich ist. Selbstverständlich kann das Kraftfahrzeug 2 neben den vorderen Türen 10 auch hintere Türen aufweisen.

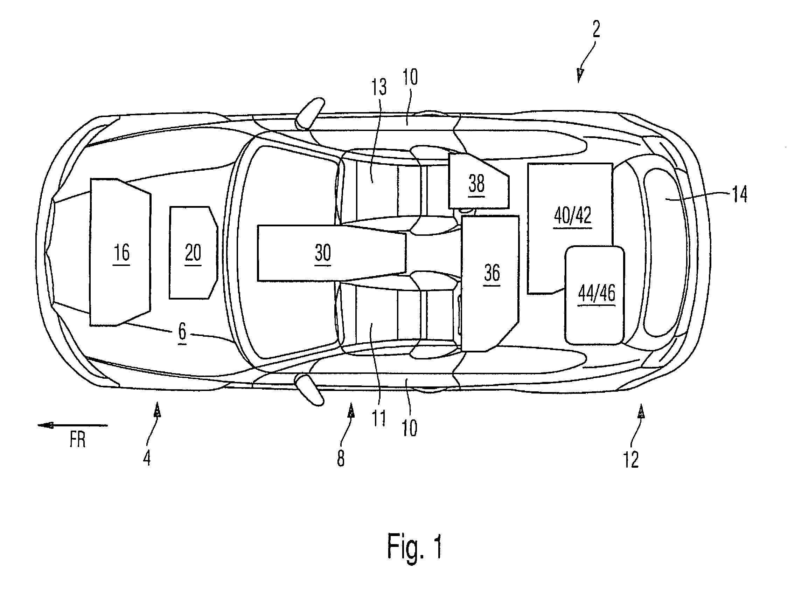

Wie den Fig. 1 bis 3 sowie 5 zu entnehmen ist, ist im Motorraum 6 neben einem quer eingebauten Verbrennungsmotor 16 im Bereich einer Stirnwand 18, die den Motorraum 6 von der Fahrgastzelle 8 trennt, eine Brennstoffzelle 20 vorgesehen. Der Verbrennungsmotor 16 treibt über ein Getriebe 22 und Antriebswellen 24 die Räder 26 der Vorderachse 28 an.

Im Bereich des Mitteltunnels des Kraftfahrzeugs 2 ist ein Speicher 30 für elektrische Energie angeordnet.

Im Bereich vor den Rädern 34 der Hinterachse 32 des Kraftfahrzeugs und unterhalb der Fondsitzbank 15, im Bereich unterhalb des so genannten Fersenblechs, sind zwei Speicher 36 und 38 zur Aufnahme von Betriebsstoffen für die beiden Antriebsaggregate 16 und 20 vorgesehen. Bei dem Speicher 36 handelt es sich um einen Tank für Wasserstoff, während der Speicher 38 ein Tank für Benzin, Diesel oder Erdgas ist.

Die Räder 34 der Hinterachse 32 werden von einem Elektromotor 40 mit einer direkt angeflanschten Getriebe-Differentialeinheit 42 angetrieben. Oberhalb der Hinterachse 32 befinden sich im Gepäckraum 12 des Kraftfahrzeugs 2 ein DC/DC-Wandler 44, ein Wechselrichter 46 sowie eine nicht dargestellte Leistungselektronik zur Ansteuerung des Elektromotors 40.

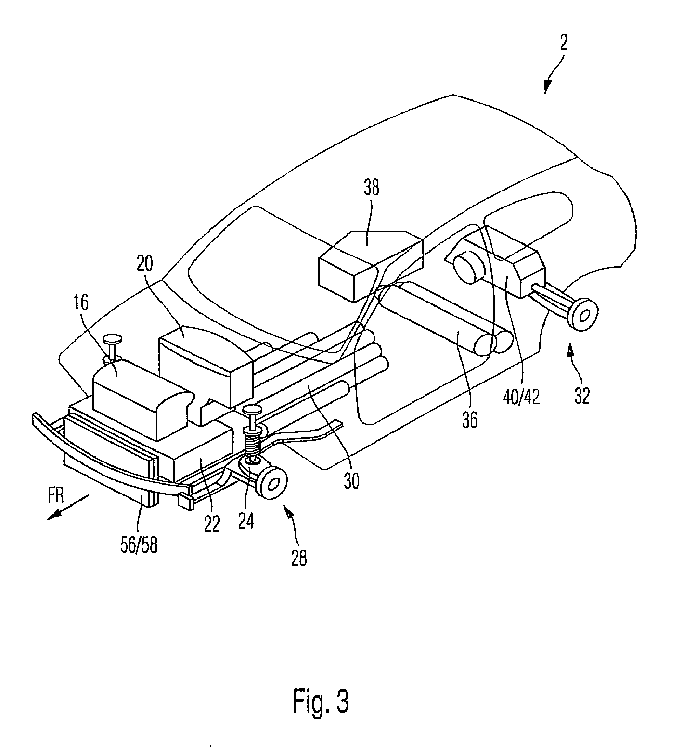

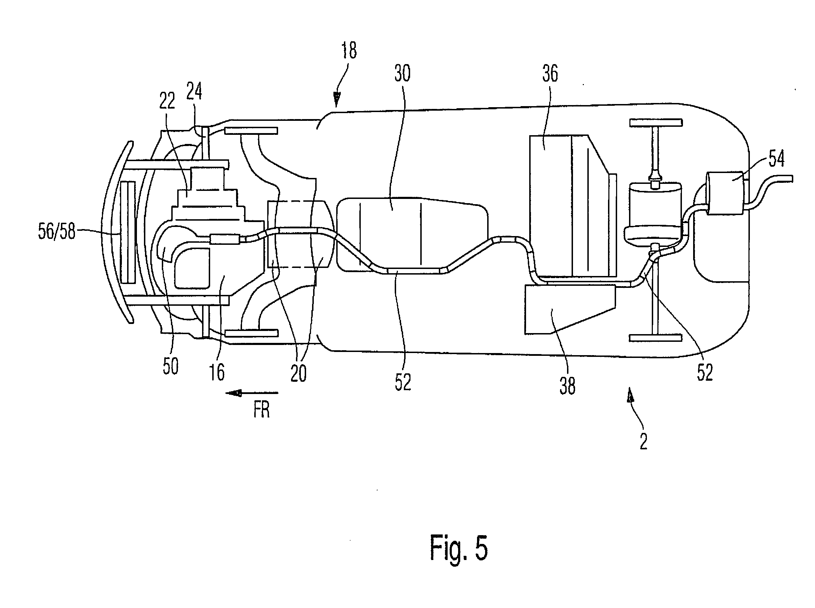

Wie aus der Darstellung der Fig. 3 näher hervorgeht, ist der Verbrennungsmotor 16 quer zur Fahrtrichtung FR angeordnet. Bei dem Verbrennungsmotor 16 handelt es sich beispielsweise um einen Vierzylinder-Reihen-Ottomotor. Der Verbrennungsmotor 16 wird mit dem Betriebsstoff aus dem Behälter 38 gespeist. Der Verbrennungsmotor 16 ist so angeordnet, dass sich der Abgaskrümmer 50 der Abgasanlage an der Vorderseite des Verbrennungsmotors 16 befindet. Somit wird die thermische Beaufschlagung der Brennstoffzelle 20 durch den Verbrennungsmotor 16 reduziert. Die beschriebene Anordnung des Abgaskrümmers 50 sowie der Verlauf einer Abgasleitung 52 mit einem Endschalldämpfer 54 gehen aus Fig. 5 hervor.

Wie insbesondere in Fig. 5 näher dargestellt ist, ist die Brennstoffzelle 20 unmittelbar benachbart zum Verbrennungsmotor 16 angeordnet, jedoch mit ausreichendem Abstand für die Einbringung von thermischem Isolationsmaterial. Hierfür ist ein Abstand von mindestens 30 mm vorgesehen, um zu gewährleisten, dass die Brennstoffzelle ein Temperaturniveau von 60° C nicht überschreitet. Desweiteren dient eine Einheit aus zwei Wärmetauschern 56 und 58 an der Vorderseite des Kraftfahrzeugs 2 zur Kühlung verschiedener Komponenten des Kraftfahrzeugs 2, unter anderem auch zur Kühlung der Brennstoffzelle 20.

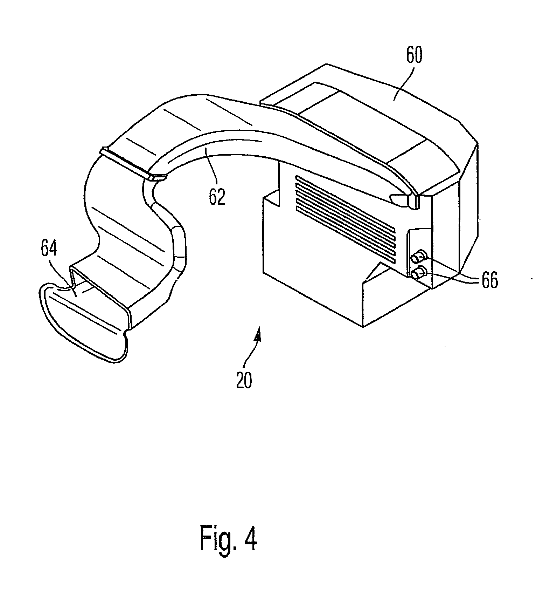

Die Brennstoffzelle 20 ist in Fig. 4 näher dargestellt. Die Brennstoffzelle 20 weist ein im Wesentlichen rechteckförmiges Gehäuse 60 auf, mit einem Luftführungskanal 62 und einem Lufteinlaßtrichter 64 an der Vorderseite sowie Rohrstutzen 66 zum Anschluss von Kühlmittelleitungen. Die beispielhaft abgebildete Brennstoffzelle 20 hat eine Leistung von etwa 5 kW.

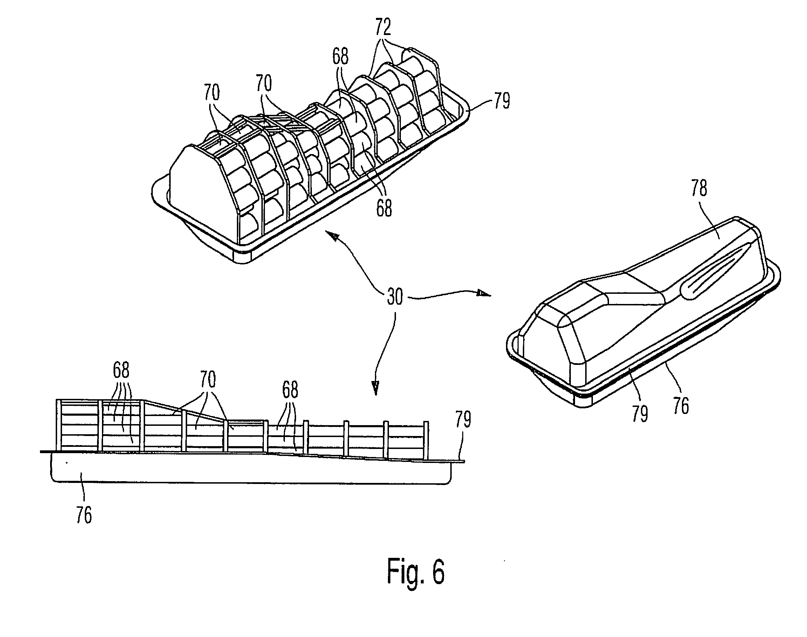

Die einzelnen Darstellungen der Fig. 6 zeigen den elektrischen Speicher 30 näher. Der Speicher 30 setzt sich aus einer Mehrzahl einzelner Doppelschicht-Kondensatoren 68 zusammen, die zu Paketen 70 zusammengefasst und über Trennwände 72 voneinander getrennt sind. Entsprechend dem zur Verfügung stehenden Bauraum im Bereich des Mitteltunnels ist in dessen vorderem Bereich eine größere Bauhöhe des Speichers 30 möglich, also in einem Bereich, in den bei Kraftfahrzeugen konventioneller Bauart häufig ein Abschnitt des Getriebes hineinragt. Im vorliegenden Beispiel wird der Speicher 30 von 148 einzelnen Doppelschicht-Kondensatoren 68 mit einem Durchmesser von ca. 60 mm und einer Länge von etwa 100 mm gebildet, wobei jeder Kondensator 68 eine Kapazität von jeweils etwa 2000 F aufweist, wobei sich insgesamt eine maximale Speicherkapazität von etwas mehr als 200 Wh ergibt. Die einzelnen Kondensatoren 68 sind in einem Gehäuse 74 aufgenommen, das sich aus einer Unterschale 76 und einer Oberschale 78 aus glasfaserverstärktem Kunststoff zusammensetzt, die gegen den Eintritt von flüssigen und festen Partikeln entlang von Flanschen 79 abdichtend miteinander verbunden sind und die Kondensatoren 68 geschützt vor äußeren Einflüssen in ihrem Inneren aufnehmen. Der Speicher 30 einschließlich des Gehäuses 74 beansprucht im vorliegenden Ausführungsbeispiel ein Volumen von etwa 80 dm³.

In Abweichung zum dargestellten Ausführungsbeispiel können selbstverständlich auch Lithium-Ionen-Batterien oder andere elektrische Energiespeicher eingesetzt werden.

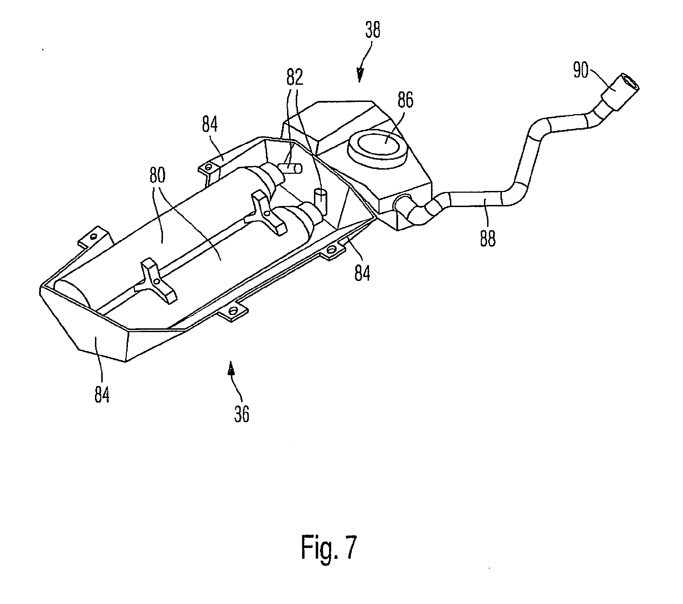

Fig. 7 zeigt die Speicher 36 und 38 näher. Der Speicher 36 zur Aufnahme von Wasserstoff ist in der dargestellten besonders einfachen Ausführungsform in Gestalt zweier Gasflaschen 80 ausgebildet. Diese handelsüblichen so genannten 10-Liter-Flaschen 80 nehmen jeweils 140 g Wasserstoff bei einem Druck von 200 bar auf. Hieraus ergibt sich bei Zugrundelegung von Geschwindigkeitsprofilen des innerstädtischen Betriebs eine Reichweite von etwa 30 km, bei rein elektrischem Betrieb über die Brennstoffzelle 20. Die beiden Gasflaschen 80 sind parallel geschaltet und können über nicht dargestellte Befüll-Leitungen, die an ihren Ventilen 82 ansetzen, von außerhalb des Kraftfahrzeugs 2 befüllt werden. Die Enden der Befüll-Leitungen sind bevorzugt in den Bereich einer herkömmlichen Tankmulde geführt, so dass eine einfache Befüllung von außerhalb des Kraftfahrzeugs 2 möglich ist. Die beiden Gasflaschen 80 sind zur Unterseite des Kraftfahrzeugs 2 durch ein schlagfestes Gehäuse 84 aus einem metallischen Werkstoff geschützt.

Bei dem Ausführungsbeispiel gemäß Fig. 7 handelt sich um eine kostengünstige Lösung, die selbstverständlich hinsichtlich der Menge an speicherbarem Wasserstoff optimiert werden kann. Dementsprechend kann in den oben beschriebenen Bauraum vor der Hinterachse 32 des Kraftfahrzeugs 2 jeder beliebige Speicher für Wasserstoff integriert werden, beispielsweise ein Drucktank aus CFK mit einem Fülldruck von 350 oder 700 bar, ein Tank für Flüssigwasserstoff, ein Kryodrucktank etc.

Unmittelbar neben dem Speicher 36 befindet sich der Speicher 38 zur Aufnahme von Kraftstoff für den Verbrennungsmotor 16. Das Innere des Speichers 38 ist über einen Verschlussdeckel 86 gut zugänglich. Außerdem ist in Fig. 7 eine Befüll-Leitung 88 dargestellt, deren speicherabgewandtes Ende 90 in der bereits oben beschriebenen Tankmulde endet.

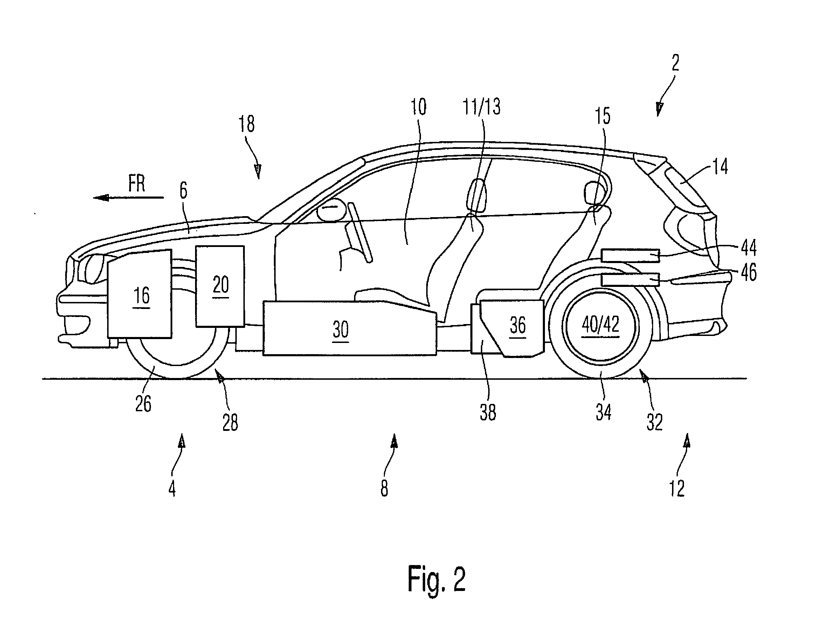

Wie insbesondere aus den Fig. 2 und 3 hervorgeht, gewährleistet das "Package" des erfindungsgemäßen Kraftfahrzeugs 2 eine große Alltagstauglichkeit, indem die Transportkapazität des Kraftfahrzeugs 2 gegenüber einem konventionellen Kraftfahrzeug nicht nennenswert reduziert ist. Das erfindungsgemäße Kraftfahrzeug 2 zeichnet sich dadurch aus, dass es im innerstädtischen Bereich emissionsfrei bewegt werden kann, indem die elektrische Energie, die von der Brennstoffzelle 16 durch Oxidation von mitgeführtem Wasserstoff erzeugt wird, unmittelbar oder über Zwischenspeicherung im Speicher 30 dem Elektromotor 40 zugeführt wird. Bei einer Dimensionierung des Verbrennungsmotors 16 mit beispielsweise etwa 75 bis 90 kW sowie einer maximalen Leistungsabgabe des Elektromotors 40 von etwa 80 kW und einer Auslegung der Brennstoffzelle mit 5 kW elektrischer Leistung ergeben sich bei einem Kraftfahrzeug 2 mit Abmessungen, wie sie aus den Fig. 1 bis 3 und 5 ersichtlich sind, sowohl im innerstädtischen Verkehr als auch bei Betrieb des Kraftfahrzeugs 2 außerhalb städtischer Bereiche gute Fahrleistungen und Reichweiten, so dass das Kraftfahrzeug 2 insgesamt vielseitig eingesetzt werden kann. Von entscheidender Bedeutung ist hierbei, dass die Brennstoffzelle 20 nur als Hilfsenergiequelle konzipiert ist, um den Betrieb im innerstädtischen Bereich mit vergleichsweise geringen Leistungsanforderungen zu ermöglichen.

Die Erfindung lässt sich wie folgt zusammenfassen: Ein erfindungsgemäßes Kraftfahrzeug 2 weist zwei Antriebsaggregate in Form eines Verbrennungsmotors 16 und eines Elektromotors 40 auf. Eine vergleichsweise klein dimensionierte Brennstoffzelle 20 stellt für den Betrieb des Kraftfahrzeugs 2 bei niedrigen Geschwindigkeiten, bevorzugt in einem innerstädtischen Bereich, elektrische Energie zur Verfügung, die direkt und/oder über einen elektrischen Speicher 30 dem Elektromotor 40 zugeführt wird. Somit kann bei Betrieb der Brennstoffzelle 20 mit Wasserstoff das Kraftfahrzeug 2 emissionsfrei bewegt werden. Für den Betrieb außerhalb städtischer Bereiche steht der Verbrennungsmotor 16 mit entsprechend höherer Leistung zur Verfügung. Die Brennstoffzelle 20 ist zusammen mit dem Verbrennungsmotor 16 im Motorraum 4 des Kraftfahrzeugs 2 angeordnet.

## Patentansprüche

1. Kraftfahrzeug mit zumindest zwei Antriebsaggregaten in Form eines Verbrennungsmotors und eines Elektromotors sowie mit einer Brennstoffzelle zur Bereitstellung elektrischer Energie,
**dadurch gekennzeichnet, dass** der Verbrennungsmotor (16) und die Brennstoffzelle (20) in einem Motorraum (6) am vorderen Endabschnitt des Kraftfahrzeugs (2) angeordnet sind.

2. Kraftfahrzeug nach Anspruch 1,
**dadurch gekennzeichnet, dass** der Verbrennungsmotor (16) quer zur Fahrtrichtung (FR) angeordnet ist.

3. Kraftfahrzeug nach Anspruch 1 oder 2,
**dadurch gekennzeichnet, dass** Verbrennungsmotor (16) und Brennstoffzelle (20) thermisch voneinander getrennt sind.

4. Kraftfahrzeug nach Anspruch 2 oder 3,
**dadurch gekennzeichnet, dass** der Abgaskrümmer (50) des Verbrennungsmotors (16) an dessen fahrtrichtungszugewandter Seite und die Brennstoffzelle (20) an der fahrtrichtungsabgewandten Seite des Verbrennungsmotors (16) angeordnet ist.

5. Kraftfahrzeug nach einem der vorgenannten Ansprüche,
**dadurch gekennzeichnet, dass** eine Speichereinheit (30) für von der Brennstoffzelle (20) erzeugte elektrische Energie vorgesehen ist.

6. Kraftfahrzeug nach Anspruch 5,
**dadurch gekennzeichnet, dass** die Speichereinheit (30) im Bereich eines Mitteltunnels des Kraftfahrzeugs (2) angeordnet ist.

7. Kraftfahrzeug nach einem der vorgenannten Ansprüche,
**dadurch gekennzeichnet, dass** im Bereich unmittelbar vor der Hinterachse (32) des Kraftfahrzeugs (2) wenigstens ein Behälter (36; 38) für einen Betriebsstoff für die Brennstoffzelle (20) und/oder den Verbrennungsmotor (16) vorgesehen ist.

8. Kraftfahrzeug nach einem der vorgenannten Ansprüche,
**dadurch gekennzeichnet, dass** der Verbrennungsmotor (16) die Räder (26) der Vorderachse (28) des Kraftfahrzeugs (2) antreibt und der Elektromotor (40) die Räder (34) der Hinterachse (32) des Kraftfahrzeugs (2) antreibt und der Elektromotor (40) benachbart zur Hinterachse (32) angeordnet ist.

9. Kraftfahrzeug nach einem der vorgenannten Ansprüche,
**dadurch gekennzeichnet, dass** im Bereich eines hinteren Gepäckraums (12) des Kraftfahrzeugs (2) eine Leistungselektronik und/oder ein DC/DC-Wandler (44) und/oder ein Wechselrichter (46) vorgesehen ist bzw. sind.

10. Kraftfahrzeug nach einem der vorgenannten Ansprüche,
**dadurch gekennzeichnet, dass** am vorderen Endabschnitt des Kraftfahrzeugs (2) wenigstens ein Wärmetauscher (56, 58) für ein Kühlmedium vorgesehen ist, zur Kühlung des Verbrennungsmotors (16) und/oder des Elektromotors (40) und/oder der Brennstoffzelle (20) und/oder der Leistungselektronik und/oder des DC/DC-Wandlers (44) und/oder des Wechselrichters (46).

## Claims

1. A motor vehicle comprising at least two drive units in the form of an internal combustion engine and an electric motor and a fuel cell for providing electric energy,
**characterised in that** the engine (16) and the fuel cell (20) are disposed in an engine compartment (6) at the front end portion of the vehicle (2).

2. A vehicle according to claim 1,
**characterised in that** the engine (16) is disposed transversely of the direction of travel (FR).

3. A vehicle according to claim 1 or claim 2,
**characterised in that** the engine (16) and the fuel cell (20) are heat-insulated from one another.

4. A vehicle according to claim 2 or claim 3,
**characterised in that** the exhaust manifold (50) of the engine (16) is disposed on the side thereof facing the direction of travel and the fuel cell (20) is disposed on the side of the engine remote from the direction of travel.

5. A vehicle according to any of the preceding claims,
**characterised in that** a storage unit (30) is provided for the electric energy generated by the fuel cell (20).

6. A vehicle according to claim 5,
**characterised in that** the storage unit (30) is disposed in the neighbourhood of a central tunnel of the vehicle (2).

7. A vehicle according to any of the preceding claims,
**characterised in that** at least one container (36; 38) is provided in the region immediately in front of the rear axle (32) of the vehicle (2) for a fuel for the fuel cell (20) and/or the engine (16).

8. A vehicle according to any of the preceding claims,
**characterised in that** the engine (16) drives the wheels (26) on the front axle (28) of the vehicle (2) and the electric motor (40) drives the wheels (34) on the rear axle (32) of the vehicle (2) and the electric motor (40) is disposed near the rear axle (32).

9. A vehicle according to any of the preceding claims,
**characterised in that** a power electronics and/or a DC/DC converter (44) and/or an inverter (46) is provided in the neighbourhood of a rear luggage space (12) on the vehicle (2).

10. A vehicle according to any of the preceding claims,
**characterised in that** at least one heat exchanger (56, 58) for a cooling medium is provided on the front end portion of the vehicle (2), for cooling the engine (16) and/or the electric motor (40) and/or the fuel cell (20) and/or the power electronics and/or the DC/DC converter (44) and/or the inverter (46).

## Revendications

1. Véhicule comportant au moins deux mécanismes d'entrainement réalisés sous la forme d'un moteur à combustion interne et d'un moteur électrique ainsi qu'une cellule électrochimique pour fournir de l'énergie électrique,
**caractérisé en ce que**
le moteur à combustion interne (16) et la cellule électrochimique (20) sont montés dans un volume moteur (6) situé à l'extrémité avant du véhicule (2).

2. Véhicule conforme à la revendication 1,
**caractérisé en ce que**
le moteur à combustion interne (16) est monté transversalement à la direction de déplacement (FR).

3. Véhicule conforme à la revendication 1 ou 2,
**caractérisé en ce que**
le moteur à combustion interne (16) et la cellule électrochimique (20) sont thermiquement séparés.

4. Véhicule conforme à la revendication 2 ou 3,
**caractérisé en ce que**
le collecteur d'échappement (50) du moteur à combustion interne (16) est monté sur sa face orientée dans la direction de déplacement tandis que la cellule électrochimique (20) est montée du côté opposé à la direction de déplacement du moteur à combustion interne (16).

5. Véhicule conforme à l'une des revendications précédentes,
**caractérisé en ce qu'**
il est prévu une unité de stockage (30) de l'énergie électrique produite par la cellule électrochimique (20).

6. Véhicule conforme à la revendication 5,
**caractérisé en ce que**
l'unité de stockage (30) est montée dans la zone d'un tunnel médian du véhicule (2).

7. Véhicule conforme à l'une des revendications précédentes,
**caractérisé en ce que**
dans la zone située immédiatement en amont de l'essieu arrière (32) du véhicule (2) il est prévu au moins un réservoir (36, 38) d'un agent de fonctionnement de la cellule électrochimique (20) et/ou du moteur à combustion interne (16).

8. Véhicule conforme à l'une des revendications précédentes,
**caractérisé en ce que**
le moteur à combustion interne (16) entraine les roues (26) de l'essieu avant (28) du véhicule (2) tandis que le moteur électrique (40) entraine les roues (34) de l'essieu arrière (32) du véhicule (2), et le moteur électrique (40) est monté au voisinage de l'essieu arrière (32).

9. Véhicule conforme à l'une des revendications précédentes,
**caractérisé en ce que**
dans la zone d'un volume pour les bagages arrière (12) du véhicule (2) il est prévu une électronique de puissance et/ou un convertisseur à courant continu (44) et/ou un redresseur (46).

10. Véhicule conforme à l'une des revendications précédentes,
**caractérisé en ce que**
au niveau du segment d'extrémité avant du véhicule (2) il est prévu au moins un échangeur de chaleur (56, 58) pour un fluide de refroidissement permettant de refroidir le moteur à combustion interne (16) et/ ou le moteur électrique (40) et/ou la cellule électrochimique (20) et/ou l'électronique de puissance et/ou le convertisseur à courant continu (44) et/ou le redresseur (46).
